# EUROPEAN PATENT SPECIFICATION

(11) **EP 2 408 125 B1**
(45) Date of publication and mention of the grant of the patent: **05.12.2012**
(21) Application number: 10168889.3
(22) Date of filing: 08.07.2010
(51) Int. Cl.: H04B 10/145, H04J 14/02, G02B 6/293, H04B 10/155

(54) **Optical transmitter for wdm passive optical network**
Optischer Sender für ein passives optisches WDM-Netzwerk
Transmetteur optique pour réseaux optiques passifs wdm

(43) Date of publication of application: 18.01.2012
(73) Proprietor: Alcatel Lucent, 75007 Paris (FR)
(72) Inventor: Marazzi, Lucia, 27010, Borgarello (PV) (IT); Galli, Paola, 25030, Adro (BS) (IT); Parolari, Paola, 20052, Monza (IT); Di Mola, Domenico, 20045, Besana Brianza (MB) (IT); Spinelli, Carlo, 20090, Settala (MI) (IT); Martinelli, Mario, 20097, San Donato Milanese (MI) (IT)
(74) Representative: Wetzel, Emmanuelle

(56) References cited:
- US-A1- 2004 067 059
- US-A1- 2005 129 404
- US-A1- 2009 208 212
- US-A1- 2010 158 524
- WONG E ET AL: "Directly-Modulated Self seeding reflective SOAs as colorless transmitters for WDM passive optical networks", OPTICAL FIBER COMMUNICATION CONFERENCE (OFC),, 5 March 2006 (2006-03-05), XP009142826,

## Description

### Technical field

The present invention generally relates to the field of access networks. In particular, the present invention relates to an optical transmitter, in particular (but not exclusively) for a WDM (Wavelength Division Multiplexing) passive optical network, and to a WDM PON comprising such an optical transmitter.

### Background art

As it is known, a passive optical network (briefly termed PON) is a type of access network, i.e. a network allowing a plurality of users to be connected to a node of a core network (for instance, a metropolitan area network).

A PON typically comprises an optical line termination (briefly termed OLT) and an optical distribution network (briefly termed ODN). The ODN in turn comprises a plurality of optical links (typically comprising silica-based single-mode optical fibers) and passive optical components arranged so as to form a point-multipoint structure whose root is connected to the OLT. The OLT is typically located at a central office (in brief, CO) of the service provider. Each optical link of the OLT may be terminated at its far end by a respective optical network unit (briefly termed ONU). Depending on the applications, an ONU may be located within the user's home (FTTH - Fiber To The Home), at the basement of a building (FTTB - Fiber To The Building) or at the curb in the proximity of one or more buildings (FTTC - Fiber To The Curb).

In a WDM (Wavelength Division Multiplexing) PON, each ONU may communicate with the OLT by using a respective couple of wavelengths, comprising an upstream wavelength (which the ONU uses for transmission to the OLT) and a downstream wavelength (which the OLT uses for transmission to the ONU). The upstream wavelengths may be for instance located in the so-called C band (1530 nm - 1565 nm), whereas the downstream wavelengths may be for instance located in the so-called L band (>1565 nm).

In a WDM PON, the ODN typically comprises a so-called "remote node", a feeder optical fiber (briefly, feeder fiber) connecting the remote node to the OLT and a number of distribution optical fibers (briefly, distribution fibers) radiating from the remote node. Each distribution fiber may be terminated at its far end by an ONU or by a power splitter connecting the distribution fiber with multiple ONUs via multiple drop optical fibers (briefly, drop fibers). The feeder fiber has a length typically ranging from about 5 km to about 40 km. The distribution fibers typically have a length ranging from some tens of meters to a few kilometers, depending on the environment (metropolitan or rural) and on the application (FTTH, FTTB or FTTC). The remote node is typically a passive node, i.e. it comprises only passive components (typically AWGs, couplers, etc.) that do not need power supply.

In the downstream direction, the OLT generates downstream optical signals (briefly, downstream signals) at the downstream wavelengths associated to the ONUs, multiplexes them according to the known WDM technique and transmits them to the remote node along the feeder fiber. At the remote node, the downstream signals are demultiplexed, and each of them is forwarded to a respective ONU along a respective distribution fiber.

In the upstream direction, each ONU generates a respective upstream signal at the upstream wavelength associated thereto and transmits it along the respective distribution fiber to the remote node. The remote node multiplexes all the upstream signals received from the various ONUs according to the known WDM technique, and forwards them to the OLT through the feeder fiber. At the OLT, the upstream signals are demultiplexed and subjected to subsequent processing.

Hence, each ONU should comprise a transmitter capable of transmitting at the upstream wavelength assigned thereto. To minimize both manufacturing and inventory costs of the ONUs, it is known providing all the ONUs with a same type of transmitter which is "colorless", i.e. which in principle may transmit optical signals over a wide range of wavelengths, and that may be optically tuned by the WDM PON itself on the proper upstream wavelength assigned to the ONU, when the ONU is connected to the far end of a distribution fiber.

E. Wong et al., "Directly Modulated Self-Seeding Reflective Semiconductor Optical Amplifiers as Colourless Transmitters in a Wavelength Division Multiplexed Passive Optical Networks", Journal of Lightwave Technology, Vol. 25, n. 1, January 2007, pages 67-74, discloses a self-seeding RSOA as a colourless upstream ONU transmitter in a WDM PON. Broadband amplified spontaneous emission (ASE) light emitted from the RSOA is spectrally sliced by an AWG (Arrayed Waveguide Grating) in the remote node and feed back via a passive reflective path to seed itself. More particularly, aside from a cyclic AWG, the remote node also consists in a passive reflective path comprising an optical coupler, an optical circulator and a BPF (Band Pass Filter). To initiate self-seeding, the broadband ASE is sent upstream towards the remote node. In the upstream direction, the AWG in the remote node spectrally slices the broadband ASE from each ONU into a narrow band spectrally sliced light (termed seeding light). The BPF ensures that only the seeding light originating from each ONU is reflected back to self-seed the RSOA. The wavelength of the seeding light and then the upstream channel wavelength are solely determined by the spectral characteristics of the AWG and the BPF in the remote node.

US 2005/0129404 A1 discloses an apparatus for providing a broadcasting service through an overlay structure in a WDM-PON. The apparatus comprises: a first grating section receiving a multiplexed signal of N data communication optical wavelength signals and a broadcasting optical wavelength signal, which have separate wavelengths, transmitted from an optical line terminal (OLT) and wavelength-demultiplexing the multiplexed signal; a mirror reflecting the broadcasting optical wavelength signal wavelength-demultiplexed by the first grating section; and a second grating section receiving the reflected broadcasting optical wavelength signal and splitting it to all subscriber ports.

### Summary of the invention

The Applicant has noticed that the above known solution described by Wong et al. exhibits some drawbacks.

Indeed, the Applicant has noticed that the optical coupler provided on the feeder fiber disadvantageously introduces non negligible optical losses on the downstream signals transmitted from the OLT to the ONUs. Such optical losses disadvantageously worsen the performance of the WDM PON in the downstream direction.

Further, the solution described by Wong et al. is disadvantageously quite complex from the topological point of view, since it comprises a number of separate, discrete components (i.e. the optical coupler, the optical circulator and the BPF) that may not be integrated in a single component.

In view of the above, the Applicant has tackled the problem of providing an optical transmitter, in particular (but not exclusively) for a WDM PON, that may be optically tuned on the upstream wavelength assigned to the ONU, that minimizes impairments of the performance of the WDM PON in the downstream direction (by minimizing optical losses on the downstream signals transmitted from the OLT) and that has a simpler topology than the solution of Wong. et al.

According to a first aspect, the present invention provides an optical transmitter comprising:
- a first mirror and a second mirror;
- an optical amplifer; and
- an optical component comprising a first port and a second port,
the optical transmitter being characterized in that the optical component comprises a third port, the optical component being configured so that a first and second diffraction orders of an optical signal at a wavelength entering the optical component through the first port are focused at the second port and at the third port, respectively; and in that
the third port is optically connected to the second mirror, the first mirror and the second mirror delimiting a cavity that comprises the optical component and the optical amplifier, the cavity being configured to emit a coherent optical radiation at the wavelength through the second port.

Preferably, the optical component comprises a wavelength multiplexer/demultiplexer.

Preferably, the second mirror and the optical component are integrated in a same optical device.

Preferably, the optical transmitter further comprises a modulator configured to modulate a cavity optical radiation propagating back and forth in the cavity for providing at the second port a modulated optical signal.

Preferably, at least two of the first mirror, the optical amplifier and the modulator are integrated in a same further optical device.

According to a second aspect, the present invention provides a wavelength division multiplexing passive optical network comprising:
- an optical line termination,
- n optical network units, n being an integer equal to or higher than 1, the n optical network units having associated n respective upstream wavelengths and n respective downstream wavelengths; and
- a remote node optically connected between the optical line termination and the optical network units,
the wavelength division multiplexing passive optical network comprising an optical transmitter as set forth above.

Preferably, the first mirror and the optical amplifier are located at one optical network unit of the optical network units; and the wavelength multiplexer/demultiplexer and the second mirror are located at the remote node.

According to first embodiments, the upstream wavelengths are comprised in a first waveband and the downstream wavelengths are comprised in a second waveband, the first waveband and the second waveband being non overlapping.

Preferably, the wavelength multiplexer/demultiplexer comprises a cyclic arrayed waveguide grating, the first port having two distinct passbands at two different wavelengths, the two different wavelengths being the upstream wavelength and the downstream wavelength associated to the optical network unit.

Alternatively, the wavelength multiplexer/demultiplexer comprises a non-cyclic arrayed waveguide grating, the first port having a passband at the upstream wavelength associated to the optical network unit, and the remote node also comprises a further multiplexer/demultiplexer arranged in parallel with the multiplexer/demultiplexer and comprising a non-cyclic arrayed waveguide grating, the further multiplexer/demultiplexer having a further first port, the further first port having a passband at the downstream wavelength associated to the optical network unit.

Profitably, the second mirror has a reflectivity varying as a function of wavelength, the reflectivity being higher in the first waveband than in the second waveband.

According to further embodiments, the upstream wavelengths and the downstream wavelengths are reciprocally interleaved.

Preferably, the wavelength multiplexer/demultiplexer comprises a non-cyclic arrayed waveguide grating, the first port having a passband comprising both the upstream wavelength and the downstream wavelength associated to the optical network unit.

Preferably, the remote node further comprises a length of active optical fiber interposed between the optical component and the second mirror.

Profitably, the first mirror and the optical amplifier are located at the optical line termination.

### Brief description of the drawings

The present invention will become clearer by reading the following detailed description, given by way of example and not of limitation, to be read by referring to the accompanying drawings, wherein:
- Figure 1 shows a WDM PON;
- Figures 2a and 2b show a portion of a WDM PON and the upstream and downstream wavelengths assigned to its ONUs, respectively, according to a first embodiment of the present invention;
- Figures 3a and 3b show a portion of a WDM PON and the upstream and downstream wavelengths assigned to its ONUs, respectively, according to a second embodiment of the present invention;
- Figures 4a and 4b show a portion of a WDM PON and the upstream and downstream wavelengths assigned to its ONUs, respectively, according to a third embodiment of the present invention;
- Figure 5 shows the remote node of a WDM PON according to a fourth embodiment of the present invention;
- Figure 6 shows the remote node of a WDM PON according to a fifth embodiment of the present invention;
- Figures 7a and 7b show a WDM PON and a downstream signal transmitted therethrough, according to a sixth embodiment of the present invention; and
- Figure 8 shows a portion of a WDM PON according to a seventh embodiment of the present invention.

### Detailed description of preferred embodiments of the invention

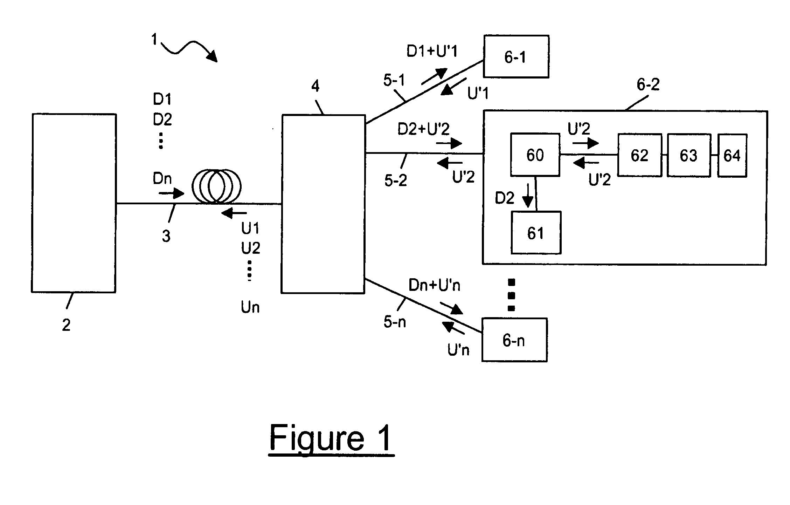

Figure 1 schematically shows a WDM PON 1 comprising an OLT 2, a feeder fiber 3, a remote node 4, a number n of distribution fibers 5-1, 5-2, ..., 5-n and a number n of ONUs 6-1, 6-2, ..., 6-n. The number n is an integer equal to or higher than 2, such as for instance 8, 16, 32, etc.

The OLT 2 is preferably connected to the remote node 4 by means of the feeder fiber 3. In turn, the remote node 3 is connected to each ONU 6-1, 6-2, ..., 6-n by means of a respective distribution fiber 5-1, 5-2, ..., 5-n.

The feeder fiber 3 preferably has a length comprised between about 5 km and about 40 km. Preferably, each distribution fiber 5-1, 5-2, ..., 5-n has a length comprised between some tens of meters and a few kilometers. Preferably, the feeder fiber 3 and the distribution fibers 5-1, 5-2, ..., 5-n are standard single-mode ITU-T G.652-compliant optical fibers.

All the ONUs 6-1, 6-2, ..., 6-n preferably have substantially the same structure. Then, in Figure 1 only the structure of the ONU 6-2 is shown in detail.

The ONU 6-2 preferably comprises a diplexer 60, a receiver 61, a modulator 62, an optical amplifier 63 and a first mirror 64. The diplexer 60 preferably has a first port connected to the distribution fiber 5-2, a second port connected to the receiver 61 and a third port connected to the modulator 62.

The receiver 61 may be any known optical receiver, such as for instance a PiN diode or an APD (Avalanche Photo-Diode).

The modulator 62 preferably is an amplitude modulator.

The optical amplifier 63 may comprise any optical component suitable for amplifying an optical signal propagating therethrough. Preferably, the optical amplifier 63 exhibits a high saturated gain, in particular low input saturation power and high output saturated power.

The modulator 62 and the optical amplifier 63 may be separated components. In this case, the optical amplifier 63 may comprise for instance an erbium-doped fiber amplifier (EDFA), while the modulator 62 may comprise for instance an electro-optical modulator (e.g. a Mach-Zehnder modulator) or an acousto-optic modulator. Alternatively, the modulator 62 and the optical amplifier 63 may be integrated in a same component comprising a gain medium suitable for varying its gain according to a driving signal (e.g. an electrical signal), thereby providing at its output an amplitude-modulated optical signal. An exemplary component of this type is a SOA (Semiconductor Optical Amplifier). According to such advantageous embodiments, the ONU 6-2 further comprises an electronic circuit (not shown in Figure 1) suitable for providing a driving signal to the modulator 62/optical amplifier 63.

The first mirror 64 is preferably suitable for reflecting optical signals in the wavelength range used for communications between the OLT 2 and the ONU 6-2. According to advantageous embodiments of the present invention, the first mirror 64 is integral with the optical amplifier 63 and/or with the modulator 62, so as to form a single component. According to particularly advantageous embodiments, the modulator 62, the optical amplifier 63 and the first mirror 64 are implemented in a single component, such as a Reflective SOA (or, briefly, RSOA). The RSOA may be for instance a C-band RSOA.

Preferably, each ONU 6-1, 6-2, ..., 6-n has assigned a respective upstream wavelength λu1, λu2, ... λun and a respective downstream wavelength λd1, λd2, ... λMn for communicating with the OLT 2. The upstream wavelengths λu1, λu2, ... λun and the downstream wavelengths λd1, λd2, ... λdn are preferably assigned by the service provider providing FTTH, FFTB or FTTC services to users through the WDM PON 1.

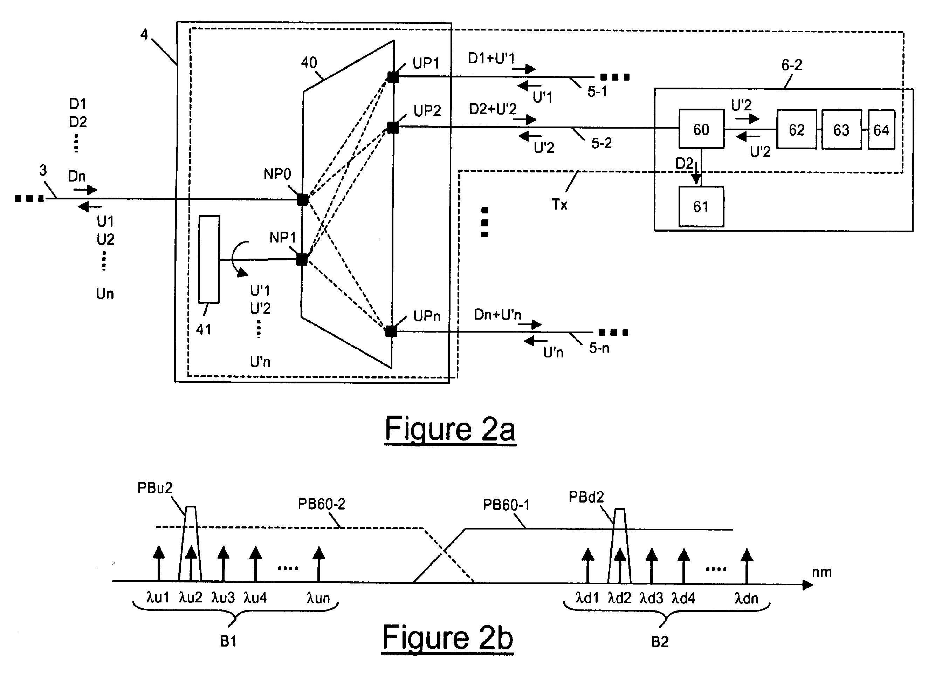

As shown in Figure 2b, according to a first embodiment of the present invention, the upstream wavelengths λu1, λu2, ... λun are comprised in a first waveband B1, whereas the downstream wavelengths λd1, λd2, .... λdn are comprised in a second waveband B2. The first waveband B1 and the second waveband B2 do not overlap. More preferably, according to this first embodiment, the first waveband B1 is the C band, whereas the second waveband is the L band. Adjacent downstream wavelengths λd1, λd2, .... λdn and adjacent upstream wavelengths λu1, λu2,.... λun are preferably spaced by a same channel spacing (for instance, about 0.8 nm).

According to this first embodiment, the diplexer 60 provided in the ONU 6-2 (and also in the other ONUs of the WDM PON 1) preferably is a 1x2 WDM coupler suitable for receiving optical signals through its first port connected to the feeder fiber 3, forwarding through its second port connected to the receiver 61 the wavelengths comprised in the second waveband B2, and through its third port connected to the modulator 62 the wavelengths comprised in the first bandwidth B1. The transfer functions PB60-1 (continuous line) and PB60-2 (dashed line) between the first and second ports and between the first and third ports of the diplexer 60 according to this first embodiment are schematically shown in Figure 2b.

With reference to Figure 2a, according to this first embodiment the remote node 4 preferably comprises a wavelength multiplexer/demultiplexer (briefly termed herein after mux/demux) 40 and a second mirror 41.

The mux/demux 40 preferably comprises an AWG (Arrayed Waveguide Grating) having a first network-side port NP0, a second network-side port NP1 and n user-side ports UP1, UP2, ... UPn. The AWG preferably is an athermal AWG.

The mux/demux 40 is preferably a cyclic AWG, i.e. each user-side port UP1, UP2, ... UPn has two distinct passbands at two different wavelengths spaced by an integer multiple of the free spectral range of the AWG. The AWG is preferably designed so that such two different wavelengths correspond to the upstream wavelength λui (i=1, 2, ...n) and the downstream wavelength λdi (i=1, 2, ...n) assigned to a same ONU 6-i (i=1, 2, ...n). By way of example, in Figure 2b the two passbands PBu2 and PBd2 of the user-side port. UP2 are shown. Each user-sidp port UP1, UP2, ... UPn is preferably connected to a respective distribution fiber 5-1, 5-2, ..., 5-n.

The first network-side port NP0 is preferably the port at which an m^{th} diffraction order (m being equal to 0, 1, 2, etc.) of optical signals entering the mux/demux 40 through the user-side ports UP1, UP2, ... UPn and having wavelengths equal to the upstream wavelengths λu1, λu2, .... λun focuses. Further, the second network-side port NP1 is preferably the port at which an (m+k)^{th} or (m-k)^{th} diffraction order (k being an integer equal to or higher than 1, preferably equal to 1) of optical signals entering the mux/demux 40 through the user-side ports UP1, UP2, ... UPn and having wavelengths equal to the upstream wavelengths λu1, λu2, .... λun focuses. The first network-side port NP0 is preferably connected to the feeder fiber 3, and the second network-side port NP1 is preferably connected to the second mirror 41.

The second mirror 41 may have has a reflectivity substantially constant over the whole wavebands B1 and B2. For instance, the second mirror 41 may comprise a metallic coating. Alternatively, the reflectivity of the second mirror 41 may vary versus wavelength, and is preferably higher in the first waveband B1 than in the second waveband B2. This wavelength-dependent behavior may be obtained for instance by means of a thin-film filter incorporated in the second mirror 41. This advantageously allows providing cheaper diplexers at the ONUs 6-1, 6-2, ... 6-n, since their bandwidth requirements may be relaxed, as it will be described in detail herein after.

According to particularly advantageous embodiments, the mux/demux 40 and the second mirror 41 are implemented as a single integrated optical component (e.g. an AWG whose second network-side port NP1 is metalized).

In view of the above, it may be noticed that in the WDM PON 1 of Figure 1 n cavities are advantageously formed, one per each ONU 6-1, 6-2, ... 6-n. In particular, by referring for instance only to the ONU 6-2, its associated cavity is delimited at its ends by the first mirror 64 and the second mirror 41, and comprises: the optical amplifier 63, the modulator 62, the diplexer 60, the distribution fiber 5-2 and the mux/demux 40 (in particular, the diffraction path joining the user-side port UP2 and the second network-side port NP1).

The reflectivity of the first mirror 64, the gain of the optical amplifier 63, the reflectivity of the second mirror 41 and the transfer function BP60-2 between first and third port of the diplexer 60 are selected so that, in the first waveband B1, the cavity has preferably a loop gain higher than 1. To this purpose, the optical amplifier 63 preferably has a spectral bandwidth coincident with the first waveband B1. This advantageously triggers a positive feedback mechanism in the cavity, that induces the cavity to emit a coherent optical radiation in the upstream direction at its output (i.e. at the first network-side port NP0). At the cavity steady state, the emission wavelength of the cavity is selected by the mux/demux 40 and the diplexer 60 (that act as filtering elements of the cavity), and is the upstream wavelength λu2. In other words, the cavity acts as an upstream coherent transmitter TX at the upstream wavelength λu2, whose output is the first network-side port NP0 of the mux/demux 40.

On the other hand, the Applicant has also noticed that, although the third port of the diplexer 60 (i.e. the port connected to the modulator 62) should ideally completely reject wavelengths comprised in the second waveband B2, this typically does not occur in a real diplexer. In particularly, currently available WDM couplers suitable for dividing the C band and the L band have a maximum rejection ratio equal to about 12 dB. Hence, between the first and third ports of the diplexer 60 the passage of a small portion of an L band optical radiation is allowed. Since, according to this first embodiment, the mux/demux 40 is cyclic (i.e. each user-side port has two passbands, one in the first waveband B1 and the other in the second waveband B2), besides the above described cavity emitting at the upstream wavelength λu2, also a parasitic cavity is formed between the first and second mirrors 64 and 41, that emits at the downstream wavelength λd2. The gain of such a parasitic cavity is preferably kept lower than 1, since it induces an in-band cross-talk over the downstream signals. To this purpose, the transfer function between the first and third ports of the diplexer 60 preferably has a rejection ratio as high as possible in the second waveband B2. Besides, the second mirror 41 is not simply a metallic mirror (whose reflectivity is substantially equal over the wavebands B1 and B2), but preferably is a thin-film mirror whose reflectivity in the first waveband B1 is much higher than its reflectivity in the second waveband B2. This allows further reducing the cavity gain in the second waveband B2 or, in other words, reducing the loop gain of the parasitic cavity.

Herein after, the operation of the WDM PON 1 according to such first embodiment of the present invention will be described in detail.

By referring first to the downstream direction, the OLT 2 generates downstream signals D1, D2, ... Dn at the downstream wavelengths λd1, λd2, ... λdn, multiplexes them according to the known WDM technique and transmits them to the remote node 4 along the feeder fiber 3. At the remote node 4, the downstream signals D1, D2, ... Dn enter the mux/demux 40 through its first network-side port NP0. Within the mux/demux 40, the downstream signals D1, D2, ... Dn are demultiplexed and each of them exits the mux/demux 40 (and then the remote node 4) through a respective user-side port UP1, UP2, ... UPn. Each downstream signal D1, D2, ... Dn then propagates along the respective distribution fiber 5-1, 5-2, ... 5-n, until it reaches the ONU 6-1, 6-2, ... 6-n.

In particular, at the ONU 6-2, the diplexer 60 preferably receives the downstream signal D2 at the downstream wavelength λd2 and forwards it to the receiver 61 through its second port. The receiver 61 preferably converts the downstream signal D2 into a corresponding electrical signal and forwards it to electrical circuits (not shown in Figure 1) of the ONU 6-2 for further processing.

In the upstream direction, at the ONU 6-2 the modulator 62 preferably superimposes an amplitude modulation to the cavity steady-state radiation at the upstream wavelength λu2, thereby generating a cavity optical signal U'2 (as described above, in the steady state the cavity emission is locked to the upstream wavelength λu2 due to the filtering effect of the mux/demux 40 and the diplexer 60). Such an amplitude modulation basically is a perturbation to the steady state of the cavity.

The cavity optical signal U'2 is preferably forwarded by the diplexer 60 through its first port, and is then fed to the remote node 4 along the optical distribution fiber 5-2.

Preferably, when the cavity optical signals U'1, U'2, ... U'n (briefly, cavity signals) generated at the ONUs 6-1, 6-2, ... 6-n at the upstream wavelengths λu1, λu2, .... λun reach the remote node 4 through the optical distribution fibers 5-1, 5-2, ... 5-n, they enter the mux/demux 40 through the user-side ports UP1, UP2, ... UPn.

Within the mux/demux 40, the m^{th} diffraction order of the cavity signals U'1, U'2, ... U'n focuses at the first network-side port NP0, so that corresponding upstream signals U1, U2, ... Un are output by the mux/demux 40 through the first network-side port NP0. The first network-side port NP0 therefore basically is the common output of the cavities/transmitters of all the ONUs 6-1, 6-2, ... 6-n. The multiplexed upstream signals U1, U2, ... Un are fed to the OLT 2 through the feeder fiber 3.

At the same time, the (m+k)^{th} or (m+k)^{th} diffraction order of the cavity signals U'1, U'2, ... U'n focuses at the second network-side port NP1, so that the cavity signals U'1, U'2, ... U'n are multiplexed at the second network-side port NP1. Then, the cavity signals U'1, U'2, ... U'n reflect onto the second mirror 41 and enter again the mux/demux 40 through the second network-side port NP1. Within the mux/demux 40, the cavity signals U'1, U'2, ... U'n are demultiplexed, so that each of them exits the mux/demux 40 (and then the remote node 4) through a respective user-side port UP1, UP2, ... UPn.

The cavity signals U'1, U'2, ... U'n are then fed back in the downstream direction from the remote node 4 to the ONUs 6-1, 6-2, ... 6-n along the distribution fibers 5-1, 5-2, ... 5-n.

In particular, at the ONU 6-2, the diplexer 60 receives the cavity signal U'2 having wavelength λu2 and preferably forwards it to the modulator 62. The cavity signal U'2 passes through the modulator 62 and the optical amplifier 63, is reflected back onto the first mirror 64 and then passes again through the optical amplifier 63 and the modulator 62.

While, after reflection onto the first mirror 64, the cavity signal U'2 passes again through the modulator 62, the modulator 62 may be imposing a new amplitude modulation to the cavity steady-state radiation at the upstream wavelength λu2 for generating a new cavity signal.

The cavity signal U'2 however carries a residual amplitude modulation (that derives from the amplitude modulation superimposed by the modulator 62 to the cavity steady-state radiation upon its generation, as described above). Such a residual modulation in principle impairs the quality of the new cavity signal (and then of the deriving new upstream signal), as the new modulation is superimposed to the residual one.

However, advantageously, the optical amplifier 63 performs a high-pass filtering function on the cavity signal U'2, that substantially cancels its residual amplitude modulation. This high-pass filtering function is due to the known self-gain modulation effect occurring in the optical amplifier 63. Hence, the quality of the new amplitude-modulated cavity signal is not impaired by the residual modulation of the cavity signal U'2. Further, suppression of the residual modulation advantageously allows generating upstream signals at a very high speed (namely, Gigabit/s), in spite of the fact that the cavity emitting the upstream signals comprises the distribution fiber, that may be as long as a few kilometers.

The high-pass filtering function of the optical amplifier 63 depends, among other parameters, on the input optical power at the optical amplifier 63 and its effectiveness is proportional to the input optical power. Thus the cavity operation, which inherently guarantees strong steady-state feedback (i.e. the cavity signal U'2 have very high optical power in steady state conditions) advantageously increases efficiency of the self-gain modulation effect occurring in the optical amplifier 63 and, accordingly, cancels the residual amplitude modulation of the cavity signal U'2 in a very efficient way.

Optionally, this high pass filtering effect can be further increased by electrical signal processing techniques, such as Feed-Forward Current Injection (FFCI).

The WDM PON 1 described above has a number of advantages.

First of all, it does not require any tuning source. Indeed, at each ONU, the ensemble modulator/optical amplifier/first mirror forms, together with the mux/demux 40 and the second mirror 41 located at the remote node 4, a transmitter TX that self-tunes to the upstream wavelengths determined by the mux/demux 40.

Avoiding tuning sources is very advantageous. Indeed, placing a tuning source at the OLT would induce non-linear effects (especially Rayleigh scattering) in the feeder fiber, which would worsen the performance of the WDM PON in the upstream direction. On the other hand, placing a tuning source at the remote node would require providing power supply at the remote node, thereby remarkably increasing the cost of the WDM PON.

Besides, whereas at the remote node the upstream and downstream signals exchanged between the OLT and the ONUs are multiplexed/demultiplexed by the mux/demux 40 based on their m^{th} diffraction order, the back-reflection for closing the cavities at the remote node is performed onto a different diffraction order (m+k)^{th} or (m+k)^{th}, by means of the second mirror 41 that terminates the second network-side port NP1 of the mux/demux 40. Therefore, advantageously, the cavities are defined (and hence brought into a steady state where they emit coherent optical radiations at the wavelengths determined by the mux/demux 40 and the diplexer 60) without inserting any additional component on the optical path between ONU and OLT. In particular, no additional component is required on the optical path between the OLT and the remote node. Hence, advantageously, no additional optical losses are induced on the downstream signals sent from OLT and ONUs.

Further, advantageously, the cavities associated to the various ONUs share the same mux/demux 40 and the same second mirror 41. Hence, the cost of such components is advantageously shared among different users.

On the other hand, the manufacturing cost of the ONUs is advantageously very low, since all the ONUs comprise components of a same type. Indeed, the diplexer 60, the receiver 61, the modulator 62, the optical amplifier 63 and the first mirror 64 are of the same type for all the ONUs, independently of the upstream and downstream wavelengths that will be assigned thereto.

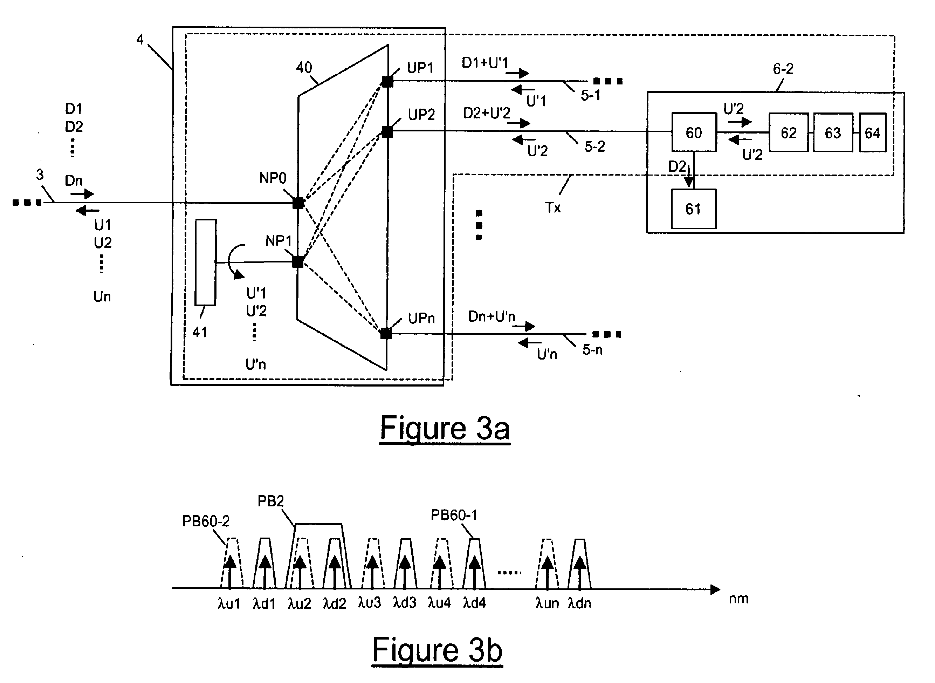

With reference to Figures 3a and 3b, the WDM PON according to a second embodiment of the present invention will be now described in detail.

As shown in Figure 3b, according to the second embodiment the upstream wavelengths λu1, λu2, ... λun and the downstream wavelengths λd1, λd2, .... λdn are preferably reciprocally interleaved. In other words, the upstream and downstream communications between the OLT 2 and each ONU 6-i (i=1, 2, ... n) are performed over adjacent channels. For instance, even (or odd) channels may be used for downstream communications, whereas odd (or even) channels may be used for upstream communications.

Hence, according to this second embodiment, the diplexer 60 provided in the ONU 6-2 (and also in the other ONUs of the WDM PON 1) preferably is a 1x2 WDM interleaver suitable for receiving optical signals through its first port connected to the feeder fiber 3, forwarding through its second port connected to the receiver 61 the wavelengths of the even (or odd) channels and through its third port connected to the modulator 62 the wavelengths of the odd (or even) channels. The transfer functions PB60-1 (continuous line) and PB60-2 (dashed line) between the first and second ports and between the first and third ports of the WDM interleaver 60 according to this second embodiment are schematically shown in Figure 3b.

With reference to Figure 3a, also according to this second embodiment, the remote node 4 preferably comprises a mux/demux 40 having a first network-side port NP0, a second network-side port NP1 and n user-side ports UP1, UP2, ... UPn, and a second mirror 41.

However, differently from the first embodiment, according to this second embodiment the mux/demux 40 is a non-cyclic AWG, i.e. each user-side port UP1, UP2, ... UPn has a single passband whose width is such that it comprises two adjacent channels (i.e. an even channel and an odd channel) whose wavelengths are the upstream wavelength λui (i=1, 2, ...n) and the downstream wavelength λdi (i=1, 2, ...n) assigned to a same ONU 6-i (i=1, 2, ...n). By way of example, in Figure 3b the passband PB2 of the user-side port UP2 is shown.

Also according to this second embodiment, the first network-side port NP0 is the port at which the m^{th} diffraction order of optical signals entering the mux/demux 40 through the user-side ports UP1, UP2, ... UPn and having wavelengths equal to the upstream wavelengths λu1, λu2, .... λun focuses. Further, also according to this second embodiment the second network-side port NP1 is the port at which the (m+k)^{th} or (m-k)^{th} diffraction order of optical signals entering the mux/demux 40 through the user-side ports UP1, UP2, ... UPn and having wavelengths equal to the upstream wavelengths λu1, λu2, .... λun focuses.

According to this second embodiment, the second mirror 41 preferably has a reflectivity substantially constant over the whole waveband comprising the upstream and downstream wavelengths. For instance, the second mirror 41 may comprise a metallic coating.

Hence, also according to this second embodiment, n cavities are advantageously formed in the WDM PON 1, one per each ONU 6-1, 6-2, ... 6-n. In particular, by referring for instance only to the ONU 6-2, its associated cavity is delimited at its ends by the first mirror 64 and the second mirror 41, and comprises: the optical amplifier 63, the modulator 62, the WDM interleaver 60, the distribution fiber 5-2 and the mux/demux 40 (in particular, the diffraction path joining the user-side port UP2 and the second network-side port NP1).

According to this second embodiment, the reflectivity of the first mirror 64, the gain of the optical amplifier 63, the reflectivity of the second mirror 41 and the transfer function BP60-2 between first and third port of the WDM interleaver 60 are selected so that the cavity has a loop gain higher than 1 over the whole waveband comprising the upstream and downstream wavelengths. This advantageously triggers a positive feedback mechanism in the cavity, that induces the cavity to emit a coherent optical radiation in the upstream direction at its output (namely, at the first network-side port NP0) at the wavelength selected by the mux/demux 40 and the WDM interleaver 60, namely the upstream wavelength λu2. In other words, the cavity acts as an upstream coherent transmitter TX at the upstream wavelength λu2, whose output is the first network-side port NP0 of the mux/demux 40.

Advantageously, in the WDM PON according to this second embodiment, the parasitic cavities at the downstream wavelengths λd1, λd2, .... λdn are kept under threshold (i.e. their loop gain is lower than 1), thanks to the very high isolation between odd and even channels in the WDM interleaver 60. Commercially available WDM interleavers show isolation higher than 25 dB.

The operation of the WDM PON according to this second embodiment is substantially the same as the operation of the WDM PON 1 according to the first embodiment. Hence, a detailed description thereof will not be repeated.

The WDM PON according to this second embodiment has substantially the same advantages described above, i.e.: it does not require any tuning source, it does not require any additional component on the optical path between the OLT and the remote node, the cost of the mux/demux 40 and second mirror 41 is shared among different users, and the manufacturing cost of the ONUs is advantageously very low, since all the ONUs comprise the same components.

In addition, as mentioned above, the WDM PON according to this second embodiment has an higher rejection of parasitic cavity effects. However, the cost of the ONUs according to this second embodiment is higher than the cost of the ONUs according to the first embodiment, because a WDM interleaver suitable for separating interleaved channels is more costly than a WDM coupler suitable for separating two non overlapping wavebands.

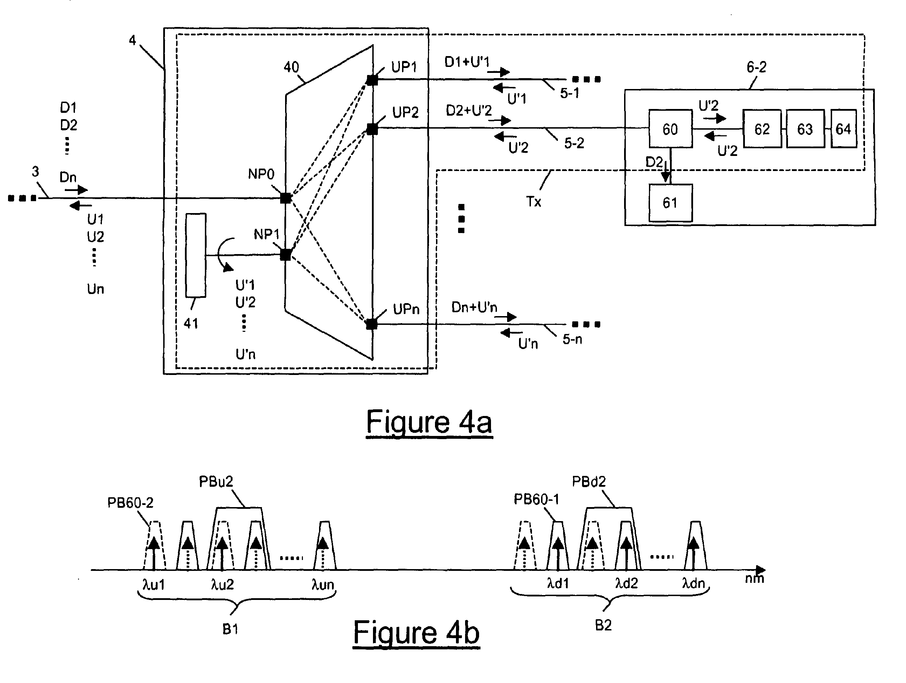

With reference to Figures 4a and 4b, the WDM PON according to a third embodiment of the present invention will be now described in detail.

As shown in Figure 4b, according to the third embodiment the upstream wavelengths λu1, λu2, ... λun are comprised in a first waveband B1, whereas the downstream wavelengths λd1, λd2, .... λdn are comprised in a second waveband B2. The first waveband B1 and the second waveband B2 do not overlap. More preferably, the first waveband B1 is the C band, whereas the second waveband B2 is the L band. Differently from the first embodiment, in the first waveband B1 only the even (or odd) channels are used, whereas in the second waveband B2 only the odd (or even) channels are used. Hence, adjacent downstream wavelengths λd1, λd2, .... λdn and adjacent upstream wavelengths λu1, λu2, .... λun are preferably spaced by a channel spacing which is about twice the channel spacing according to the first embodiment (for instance, about 1.6 nm).

Therefore, according to this third embodiment, the diplexer 60 provided in the ONU 6-2 (and also in the other ONUs of the WDM PON 1) is preferably a WDM interleaver similar to the WDM interleaver of the second embodiment. The transfer functions PB60-1 (continuous line) and PB60-2 (dashed line) between the first and second ports and between the first and third ports of the diplexer 60 according to this third embodiment are schematically shown in Figure 4b.

With reference to Figure 4a, also according to this third embodiment, the remote node 4 preferably comprises a mux/demux 40 having a first network-side port NP0, a second network-side port NP1 and n user-side ports UP1, UP2, ... UPn, and the second mirror 41.

Similarly to the first embodiment, according to the third embodiment the mux/demux 40 is preferably a cyclic AWG, i.e. each user-side port UP1, UP2, ... UPn has two distinct passbands at two different wavelengths spaced by an integer multiple of the free spectral range of the AWG. More particularly, one of the two passbands comprises the even (or odd) channel at the upstream wavelength λui assigned to the ONU 6-i and an adjacent unused odd (or even) channel, whereas the other passband comprises the odd (or even) channel at the downstream wavelength λdi assigned to the ONU 6-i and an adjacent unused even (or odd) channel. By way of example, in Figure 4b the two passbands PBu2 and PBd2 of the user-side port UP2 are shown.

Also according to this third embodiment, the first network-side port NP0 is the port at which the m^{th} diffraction order of optical signals entering the mux/demux 40 through the user-side ports UP1, UP2, ... UPn and having wavelengths equal to the upstream wavelengths λu1, λu2, .... λun focuses. Further, also according to this third embodiment the second network-side port NP1 is the port at which the (m+k)^{th} or (m-k)^{th} diffraction order of optical signals entering the mux/demux 40 through the user-side ports UP1, UP2, ... UPn and having wavelengths equal to the upstream wavelengths λu1, λu2, .... λun focuses.

The second mirror 41 may have has a reflectivity substantially constant over the whole wavebands B1 and B2. Alternatively, the reflectivity of the second mirror 41 may vary versus wavelength, and is preferably higher in the first waveband B1 than in the second waveband B2.

Hence, also according to this third embodiment, n cavities are advantageously formed in the WDM PON 1, one per each ONU 6-1, 6-2, ... 6-n. In particular, by referring for instance only to the ONU 6-2, its associated cavity is delimited at its ends by the first mirror 64 and the second mirror 41 and comprises: the optical amplifier 63, the modulator 62, the WDM interleaver 60, the distribution fiber 5-2 and the mux/demux 40 (in particular, the diffraction path joining the user-side port UP2 and the second network-side port NP1).

According to this third embodiment, the reflectivity of the first mirror 64, the gain of the optical amplifier 63, the reflectivity of the second mirror 41 and the transfer function BP60-2 between first and third port of the WDM interleaver 60 are selected so that the cavity has a loop gain higher than 1 over the first waveband B1. This advantageously triggers a positive feedback mechanism in the cavity, that induces the cavity to emit a coherent optical radiation in the upstream direction at its output (namely, at the first network-side port NP0) at the wavelength selected by the mux/demux 40 and the WDM interleaver 60, namely the upstream wavelength λu2. In other words, the cavity acts as an upstream coherent transmitter TX at the upstream wavelength λu2, whose output is the first network-side port NP0 of the mux/demux 40.

Advantageously in the WDM PON according to this third embodiment, the parasitic cavities at the downstream wavelengths λd1, λd2, .... λdn are kept under threshold (i.e. their loop gain is lower than 1), thanks to the very high isolation between odd and even channels in the WDM interleaver 60. The rejection of parasitic cavity effects may be further increased relative to the second embodiment by using an the optical amplifier 63 whose gain is higher in the first waveband B1 and lower in the second waveband B2.

The operation of the WDM PON according to this third embodiment is substantially the same as the operation of the WDM PONs according to the first and second embodiments. Hence, its description will be no repeated.

The WDM PON according to this third embodiment has substantially the same advantages described above, i.e.: it does not require any tuning source, it does not require any additional component on the optical path between the OLT and the remote node, the cost of the mux/demux 40 and second mirror 41 is shared among different users, and the manufacturing cost of the ONUs is advantageously very low, since all the ONUs comprise the same components.

In addition, as mentioned above, the WDM PON according to this third embodiment has an higher rejection of parasitic cavity effects with respect to both the first and second embodiments. However, the cost of the ONUs according to this third embodiment is higher than the cost of the ONUs according to the first embodiment, because a WDM interleaver suitable for separating interleaved channels is more costly than a WDM coupler suitable for separating two non overlapping wavebands. Moreover, the efficiency of the optical bandwidth exploitation is lower with respect to the second embodiment (only odd or even channels are used in each waveband).

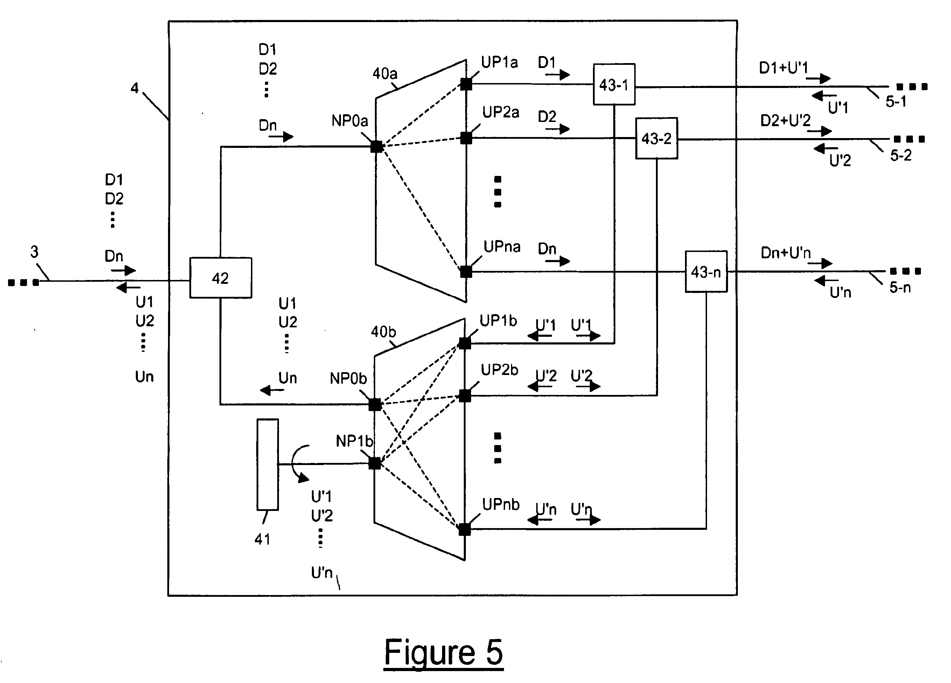

With reference to Figure 5, a WDM PON according to a fourth embodiment of the present invention will be now described in detail.

Similarly to the first embodiment, according to this fourth embodiment the upstream wavelengths λu1, λu2, ... λun are comprised in the first waveband B1, whereas the downstream wavelengths λd1, λd2, .... λdn are comprised in the second waveband B2, as shown in Figure 2b.

Hence, according to this fourth embodiment, the diplexer 60 provided in the ONU 6-2 (and also in the other ONUs of the WDM PON 1) preferably is a 1 x2 WDM coupler whose transfer functions PB60-1 and PB60-2 between the first and second ports and between the first and third ports are shown in Figure 2b.

With reference to Figure 5, according to the fourth embodiment the remote node 4 preferably comprises a first mux/demux 40a, a second mux/demux 40b, a second mirror 41, a network-side diplexer 42 and n user-side diplexers 43-1, 43-2, ... 43-n.

The first mux/demux 40a preferably comprises a non-cyclic AWG having a network-side port NP0a and n user-side ports UP1a, UP2a, ... UPna. Each user-side port UP1a, UP2a, ... UPna has a passband at a respective downstream wavelength λd1, λd2, ... λdn.

The second mux/demux 40b preferably comprises a non-cyclic AWG having a first network-side port NP0b, a second network-side port NP1b and n user-side ports UP1 b, UP2b, ... UPnb. Each user-side port UP1b, UP2b, ... UPna has a passband at a respective upstream wavelength λu1, λu2, ... λun.

The first network-side port NP0b of the second mux/demux 40b is preferably the port at which the m^{th} diffraction order of optical signals entering the second mux/demux 40b through the user-side ports UP1b, UP2b, ... UPnb and having wavelengths equal to the upstream wavelengths λu1, λu2, .... λun focuses. Further, the second network-side port NP1b of the second mux/demux 40b is preferably the port at which the (m+k)^{th} or (m-k)^{th} diffraction order of optical signals entering the second mux/demux 40b through the user-side ports UP1b, UP2b, ... UPnb and having wavelengths equal to the upstream wavelengths λu1, λu2, .... λun focuses.

The network-side diplexer 42 and the n user-side diplexers 43-1, 43-2, ... 43-n are preferably WDM couplers having a transfer functions substantially similar to the WDM coupler 60 comprised in the ONUs.

The network-side port NP0a of the first mux/demux 40a and the first network-side port NP0b of the second mux/demux 40b are preferably connected to the network-side diplexer 42, that is in turn connected to the feeder fiber 3. The user-side ports UP1a, UP2a, ... UPna of the first mux/demux 40a and the user-side ports UP1b, UP2b, ... UPnb of the second mux/demux 40b are preferably connected to the user-side diplexers 43-1, 43-2, ... 43-n, which are in turn connected to the distribution fibers 5-1, 5-2, ... 5-n. Hence, the first and second mux/demux 40a, 40b are basically arranged in a parallel configuration.

The second mirror 41 may have a reflectivity substantially constant over the whole wavebands B1 and B2. For instance, the second mirror 41 may comprise a metallic coating. Preferably, the reflectivity of the second mirror 41 may vary versus wavelength, and is preferably higher in the first waveband B1 than in the second waveband B2.

Also according to this fourth embodiment, n cavities are advantageously formed, one per each ONU 6-1, 6-2, ... 6-n. In particular, by referring for instance only to the ONU 6-2, its associated cavity is delimited at its ends by the first mirror 64 and the second mirror 41 and comprises: the optical amplifier 63, the modulator 62, the diplexer 60, the distribution fiber 5-2, the diplexer 43-2 and the second mux/demux 40b (in particular, the diffraction path joining the user-side port UP2b and the second network-side port NP1 b).

According to this fourth embodiment, the reflectivity of the first mirror 64, the gain of the optical amplifier 63, the reflectivity of the second mirror 41 and the transfer function BP60-2 between first and third port of the WDM coupler 60 are selected so that the cavity has a loop gain higher than 1 over the first waveband B1. This advantageously triggers a positive feedback mechanism in the cavity, that induces the cavity to enter a steady state where it emits a coherent optical radiation in the upstream direction at its output (namely, at the first network-side port NP0b) at the wavelength selected by the mux/demux 40 and the WDM interleaver 60, namely the upstream wavelength λu2. In other words, the cavity acts as an upstream coherent transmitter TX at the upstream wavelength λu2, whose output is the first network-side port NP0b of the second mux/demux 40b.

Herein after, the operation of the WDM PON according to such fourth embodiment of the present invention will be described.

By referring first to the downstream direction, the OLT 2 generates downstream signals D1, D2, ... Dn at the downstream wavelengths λd1, λd2, ... λdn, multiplexes them according to the known WDM technique and transmits them to the remote node 4 along the feeder fiber 3. At the remote node 4, the downstream signals D1, D2, ... Dn are forwarded by the diplexer 42 to the first mux/demux 40a. Within the first mux/demux 40a, the downstream signals D1, D2, ... Dn are demultiplexed, so that each of them exits the first mux/demux 40a through a respective user-side port UP1 a, UPa, ... UPna. Then, the downstream signals D1, D2, ... Dn are forwarded by the diplexers 43-1, 43-2, ... 43-n to the ONU 6-1, 6-2, ... 6-n through the respective distribution fiber 5-1, 5-2, ... 5-n.

In the upstream direction, each diplexer 43-1, 43-2, ... 43-n receives through the distribution fiber 5-1, 5-2, ... 5-n a cavity signal U'1, U'2, ... U'n whose amplitude modulation has been generated by the ONU 6-1, 6-2, ... 6-n as described above, and forwards it to the second mux/demux 40b. Within the second mux/demux 40b, the m^{th} diffraction order of the cavity signals U'1, U'2, ... U'n focuses at the first network-side port NP0b (thereby providing upstream signals U1, U2, ... Un that are sent to the OLT 2 through the network-side diplexer 42 and the feeder fiber 3), whereas the (m+k)^{th} or (m+k)^{th} diffraction order of the cavity signals U'1, U'2, ... U'n focuses at the second network-side port NP1b, so that the cavity signals U'1, U'2, ... U'n are multiplexed at the second network-side port NP1 b. The multiplexed cavity signals U'1, U'2, ... U'n preferably reflect onto the second mirror 41 and enter again the second mux/demux 40b through the second network-side port NP1b. Within the second mux/demux 40b, the cavity signals U'1, U'2, ... U'n are demultiplexed, so that each of them exits the second mux/demux 40b through a respective user-side port UP1b, UP2b, ... UPnb. Then, the cavity signals U'1, U'2, ... U'n are forwarded by the diplexers 43-1, 43-2, ... 43-n to the ONU 6-1, 6-2, ... 6-n through the respective distribution fiber 5-1, 5-2, ... 5-n. In the ONUs 6-1, 6-2, ... 6-n, the residual amplitude modulation carried by each cavity signal U'1, U'2, ... U'n is advantageously cancelled by the high-pass filtering function carried out by the optical amplifier contained in each ONU, as discussed above.

Advantageously, the WDM PON according to this fourth embodiment is intrinsically immune from the parasitic cavity effects described above. This is due to the fact that the second mux/demux 40b is a non-cyclic AWG (i.e. the downstream wavelengths λd1, λd2, ... λdn are not transmitted through the second mux/demux 40b, and accordingly they can not resonate in the n cavities associated to the ONUs that include the second mux/demux 40b, provided that the free spectral range of the second mux/demux 40b is higher than B1+B2).

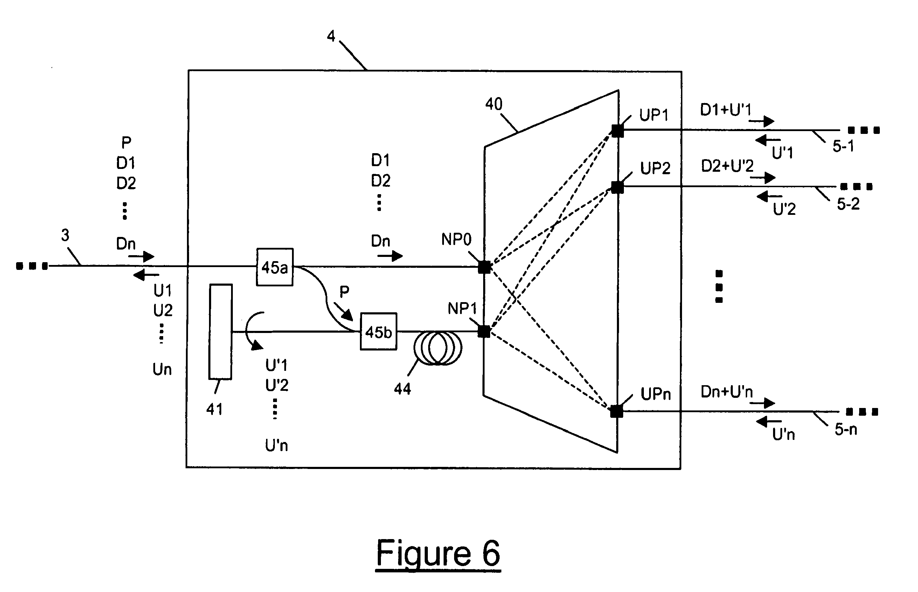

With reference to Figure 6, a WDM PON according to a fifth embodiment of the present invention will be now described in detail.

The WDM PON according to the fifth embodiment is substantially similar to the WDM PON 1 according to the first embodiment.

Further, the central office at which the OLT 2 is located preferably comprises also a pump source configured to transmit a pump optical signal P at a suitable pump wavelength λp.

The remote node 4 according to the fifth embodiment is similar to the remote node shown in Figure 2a, and in addition it comprises a length of active optical fiber 44, a first diplexer 45a and a second diplexer 45b. The length of active optical fiber 44 may be for instance a length of erbium-doped optical fiber. The first and second diplexers 45a, 45b may be for instance 1x2 WDM couplers.

The first diplexer 45a preferably has an input connected to the feeder fiber 3 and a first output connected to the first network-side port NP0 of the mux/demux 40. The second diplexer 45b has a first input connected to the second mirror 41, a second input connected to the second output of the first diplexer 45a and an output connected to the length of active optical fiber 44. The length of active optical fiber 44 is in turn connected to the second network-side port NP1 of the mux/demux 40.

Hence, according to the fifth embodiment the cavity associated to each ONU 6-1, 6-2, ... 6-n comprises also the length of active optical fiber 44.

Herein after, the operation of the WDM PON according to this fifth embodiment will be briefly described.

By referring first to the downstream direction, the OLT 2 generates downstream signals D1, D2, ... Dn at the downstream wavelengths λd1, λd2, ... λdn assigned to the ONUs 6-1, 6-2, ... 6-n and a pump optical signal P at the pump wavelength λp. For instance, if the length of active optical fiber 44 is a length of erbium-doped optical fiber, the pump wavelength λp is preferably 1480 nm.

The OLT preferably multiplexes the downstream signals D1, D2, ... Dn and the pump optical signal P according to the known WDM technique and transmits them to the remote node 4 along the feeder fiber 3. The pump P propagating in the feeder fiber 3 advantageously amplifies the downstream signals D1, D2, ... Dn thanks to the known non-linear Raman effect.

At the remote node 4, the first diplexer 45a forwards the downstream signals D1, D2, ... Dn to the first network-side port NP0 of the mux/demux 40, while it forwards the pump optical signal P to the second diplexer 45b. The subsequent processing of the downstream signals D1, D2, ... Dn within the mux/demux 40 has been already described above with reference to the first embodiment. Hence, a detailed description will not be repeated.

As to the pump optical signal P, the second diplexer 45b preferably injects it into the length of active optical fiber 44. While the pump optical signal P propagates along the length of active optical fiber 44, the length of active optical fiber 44 preferably exhibits an optical gain in the first waveband B1. Such an optical gain increases the cavity gain of the distributes cavities associated to the ONUs 6-1, 6-2, ... 6-n, and then advantageously promotes the establishment of the positive feedback inducing coherent emission at the upstream wavelengths λu1, λu2, ... λun.

In the upstream direction, as described above n multiplexed cavity signals U'1, U'2, ... U'n having their wavelengths equal to the upstream wavelengths λu1, λu2, ... λun are output by the mux/demux 40 through the second network-side port NP1. The multiplexed cavity signals U'1, U'2, ... U'n are preferably amplified by the length of active optical fiber 44, then reflect onto the second mirror 41, then are again amplified by the length of active optical fiber 44, and finally enter again the mux/demux 40 through the second network-side port NP1.

Therefore, advantageously, according to the fifth embodiment, a cavity gain much higher than in the first embodiment may be obtained, and at the same time the upstream and downstream signals are advantageously amplified during propagation in the feeder fiber 3.

Further, advantageously, the cavities associated to the various ONUs share the same length of active optical fiber 44 and the same pump source, whose cost is therefore shared among different users.

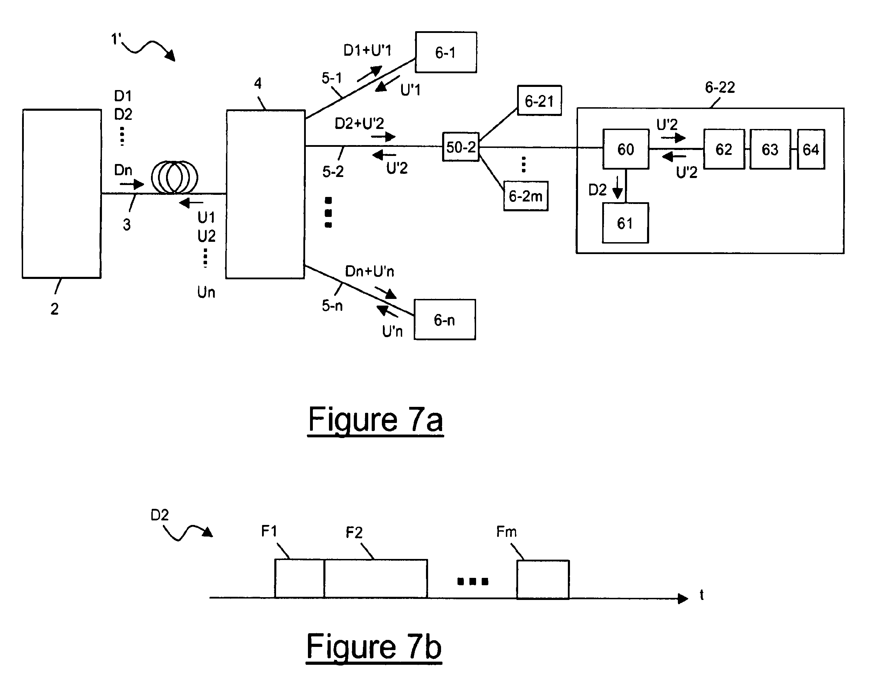

With reference to Figures 7a and 7b, a WDM PON according to a sixth embodiment of the present invention will be now described in detail.

The WDM PON 1' according to the sixth embodiment is substantially similar to the WDM PON 1 shown in Figure 1. However, differently from the WDM PON 1 of Figure 1, as shown in Figure 7a at least one of the distribution fibers 5-1, 5-2, ... 5-n (for instance, the optical distribution fiber 5-2) is connected to a 1 x m power splitter 50-2 (m being an integer equal to or higher than 2), that implements a further branching stage of the WDM PON.

In particular, the power splitter 50-2 has a network-side port connected to the distribution fiber 5-2 and m user-side ports. Each user side port is connected to a respective ONU 6-21, 6-22, ...6-2m by means of a respective drop fiber. Reference numbers of the drop fibers are omitted for not overloading Figure 7a.

Each ONU 6-21, 6-22, ... 6-2m preferably has the same structure as the ONU 6-2 shown in Figure 1. For simplicity, only the structure of the ONU 6-22 has been depicted in Figure 7a. Similarly to the ONU 6-2 of Figure 1, the ONU 6-22 of Figure 7a comprises a diplexer 60, a receiver 61, a modulator 62, an optical amplifier 63 and a first mirror 64.

Preferably, the remote node 4 has a structure similar to the remote node 4 according to the fifth embodiment of the present invention (Figure 6).

Hence, according to this sixth embodiment, m cavities are advantageously formed, one per each ONU 6-21, 6-22, ... 6-2m.

In particular, by referring for instance only to the ONU 6-22, its associated cavity is delimited at its ends by the first mirror 64 and the second mirror 41 and comprises: the optical amplifier 63, the modulator 62, the diplexer 60, the relevant drop fiber, the power splitter 50-2, the distribution fiber 5-2, the mux/demux 40 (in particular, the diffraction path joining the user-side port UP2 and the second network-side port NP1), the diplexer 45b and the length of active optical fiber 44.

The m cavities associated to the ONUs 6-21, 6-22, ...6-2m are partially overlapping (between the far end of the distribution fiber 5-2 and the second mirror 41), and resonate at a same upstream wavelength λu2. In other words, all the cavities associated to the ONUs 6-21, 6-22, ...6-2m are merged in a single transmitter that emits at the upstream wavelength λu2 and whose output is the network-side port NP0 of the mux/demux 40.

The downstream and upstream transmission between the OLT 2 and the ONUs 6-21, 6-22, ...6-2m is preferably ruled by a Time Division Multiplexing (TDM) protocol.

In particular, by referring first to the downstream direction, the OLT 2 preferably generates a downstream signal D2 at the downstream wavelength λu2. The downstream signal D2 is divided in m time frames F1, F2, ... Fm, as schematically shown in Figure 7b. Each time frame F1, F2, ... Fm contains data addressed to a respective ONU 6-21, 6-22, ...6-2m. The downstream signal D2 is multiplexed with the other downstream signals at the other downstream wavelengths and is transmitted from the OLT 2 to the remote node 4 through the feeder fiber 3. At the remote node 4, the downstream signal D2 is demultiplexed and transmitted to the power splitter 50-2 along the distribution fiber 5-2. The power splitter 50-2 splits the downstream signal D2 in m portions having substantially the same optical power. Each portion is transmitted to an ONU 6-21, 6-22, ...6-2m via the relevant drop fiber.

One of the portions of the downstream signal D2 is received at the ONU 6-22, and the diplexer 60 forwards it to the receiver 61. The receiver 61 converts the portion of the downstream signal D2 into a corresponding electrical signal, that is subsequently processed for extracting the data contained in the time frame F2 (i.e. the data addressed to the ONU 6-22).

By referring now to the upstream direction, each ONU 6-21, 6-22, ...6-2m is preferably assigned a respective time frame during which it is allowed to transmit upstream signals. The operation of each ONU during its assigned time frame is substantially the same as the ONU 6-2 shown in Figure 1. Hence, a detailed description will not be repeated. The resulting upstream signal U2 emitted by the transmitter associated to the ONUs 6-21, 6-22, ...6-2m is therefore divided in time frames, similarly to the downstream signal D2 shown in Figure 7b.

The WDM PON according to this sixth embodiment has substantially the same advantages described above, i.e.: it does not require any tuning source, it does not require any additional component on the optical path between the OLT and the remote node, the cost of the mux/demux 40, second mirror 41, the distribution fibers and the power splitters is shared among different users, and the manufacturing cost of the ONUs is advantageously very low, since all the ONUs comprise the same components.

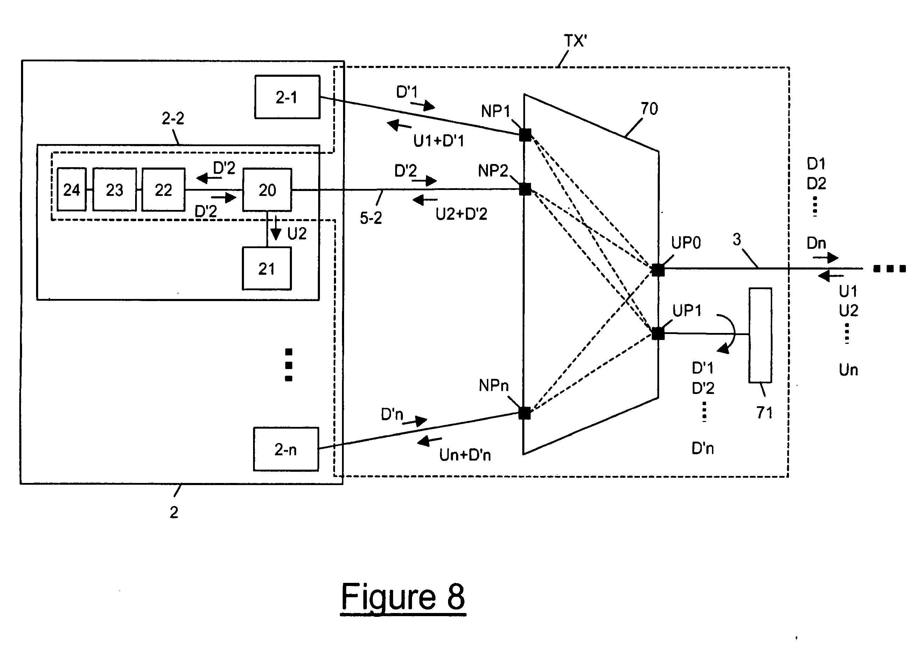

Figure 8 shows a portion of a WDM PON according to a seventh embodiment of the present invention.

According to such embodiment, the OLT 2 comprises n optical modules 2-1, 2-2, ... 2-n. In Figure 8, by way of example only the structure of the optical module 2-2 is shown in detail. The optical module 2-2 comprises a diplexer 20, a receiver 21, a modulator 22, an optical amplifier 23 and a first mirror 24.

The WDM PON of Figure 8 further comprises a mux/demux 70 and a second mirror 71. The mux/demux 70 preferably has n network-side ports NP1, NP2, ... NPn, each network side port NP1, NP2, ... NPn being connected to a respective optical module 2-1, 2-2, ... 2-n. The mux/demux 70 further has a first user-side port UP0 and a second user-side port UP1.

The first user-side port UP0 is preferably the port at which the m^{th} diffraction order of optical signals entering the mux/demux 70 through the network-side ports NP1, NP2, ... NPn and having wavelengths equal to downstream wavelengths λd1, λd2, .... λdn focuses. Further, the second user-side port UP1 is preferably the port at which the (m+k)^{th} or (m-k)^{th} diffraction order of optical signals entering the mux/demux 70 through the network-side ports NP1, NP2, ... NPn and having wavelengths equal to the downstream wavelengths λd1, λd2, .... λdn focuses. The first user-side port UP0 is preferably connected to the feeder fiber 3, and the second user-side port UP1 is preferably connected to the second mirror 71.

The mux/demux 70 and the second mirror 71 are implemented at the same central office at which the OLT 2 is located. According to advantageous embodiments not shown in the drawings, the mux/demux 70 and the second mirror 71 are implemented within the OLT 2.

By comparing Figure 8 with Figure 1, it may be appreciated that the ensemble of the optical module 2-2, the mux/demux 70 and the second mirror 71 basically has a structure symmetric to the structure of the ONU 6-2, the mux/demux 40 and the second mirror 41. Hence, according to this seventh embodiment, the optical module 2-2 has associated a cavity delimited by the first and second mirrors 24, 71, that resonates at the wavelength selected by the mux/demux 70 and the diplexer 20, i.e. the downstream wavelength λd2.

The components of the cavity are preferably selected so that the loop gain of the cavity is higher than 1. Under this condition, the cavity advantageously acts as a downstream coherent transmitter TX' at the downstream wavelength λd2, whose output is the first user-side port UP0 of the mux/demux 70.

According to embodiments not shown in the drawings, a WDM PON may comprise both the arrangement shown in Figure 8 at its central office, and the remote node and the ONUs shown in Figure 2a, 3a, 4a, 5, 6 and 7a.

## Claims

1. An optical transmitter (TX; TX') comprising:
- a first mirror (64; 24) and a second mirror (41; 71);
- an optical amplifier (63; 23); and
- an optical component (40; 70) comprising a first port (UP2; NP2) and a second port (NP0; UP0),
said optical transmitter (TX; TX') being **characterized in that** said optical component (40; 70) comprises a third port (NP1; UP1), said optical component (40; 70) being configured so that a first and second diffraction orders of an optical signal (U'2; D'2) at a wavelength (λu2; λd2) entering said optical component (40; 70) through said first port (UP2; NP2) are focused at said second port (NP0; UP0) and at said third port (NP1; UP1), respectively; and **in that**
said third port (NP1; UP1) is optically connected to said second mirror (41; 21), said first mirror (64; 24) and said second mirror (41; 71) delimiting a cavity that comprises said optical component (40; 70) and said optical amplifier (63), said cavity being configured to emit a coherent optical radiation at said wavelength (λu2) through said second port (NP0).

2. The optical transmitter (TX; TX') according to claim 1, wherein said optical component (40; 70) comprises a wavelength multiplexer/demultiplexer (40; 70).

3. The optical transmitter (TX; TX') according to claim 1 or 2, wherein said second mirror (41; 71) and said optical component (40; 70) are integrated in a same optical device.

4. The optical transmitter (TX; TX') according to any of the preceding claims, wherein it further comprises a modulator (62; 22) configured to modulate a cavity optical radiation propagating back and forth in said cavity for providing at said second port (NP0) a modulated optical signal (U2; D2).

5. The optical transmitter (TX; TX') according to claim 4, wherein at least two of said first mirror (64; 24), said optical amplifier (63; 23) and said modulator (62; 22) are integrated in a same further optical device.

6. A wavelength division multiplexing passive optical network (1) comprising:
- an optical line termination (2),
- n optical network units (6-1, 6-2, -6-n), n being an integer equal to or higher than 1, said n optical network units (6-1, 6-2, ... 6-n) having associated n respective upstream wavelengths (λu1, λu2, ... λun) and n respective downstream wavelengths (λd1, λd2, ... λdn); and
- a remote node (4) optically connected between said optical line termination (2) and said optical network units (6-1, 6-2, -6-n),
said wavelength division multiplexing passive optical network (1) comprising an optical transmitter (TX; TX') according to any of claims 2 to 5.

7. The wavelength division multiplexing passive optical network (1) according to claim 6, wherein:
- said first mirror (64) and said optical amplifier (63) are located at one optical network unit (6-2) of said optical network units (6-1, 6-2, -6-n); and
- said wavelength multiplexer/demultiplexer (40) and said second mirror (41) are located at said remote node (4).

8. The wavelength division multiplexing passive optical network (1) according to claim 7, wherein said upstream wavelengths (λu1, λu2, ... λun) are comprised in a first waveband (B1) and said downstream wavelengths (λd1, λd2, ... λdn) are comprised in a second waveband (B2), said first waveband (B1) and said second waveband (B2) being non overlapping.

9. The wavelength division multiplexing passive optical network (1) according to claim 8, wherein said wavelength multiplexer/demultiplexer (40) comprises a cyclic arrayed waveguide grating, said first port (UP2) having two distinct passbands at two different wavelengths, said two different wavelengths being the upstream wavelength (λu2) and the downstream wavelength (λd2) associated to said optical network unit (6-2).

10. The wavelength division multiplexing passive optical network (1) according to claim 8, wherein said wavelength multiplexer/demultiplexer (40b) comprises a non-cyclic arrayed waveguide grating, said first port (UP2b) having a passband at the upstream wavelength (λu2) associated to said optical network unit (6-2), and wherein said remote node (4) also comprises a further multiplexer/demultiplexer (40a) arranged in parallel with said multiplexer/demultiplexer (40b) and comprising a non-cyclic arrayed waveguide grating, said further multiplexer/demultiplexer (40a) having a further first port (UP2a), said further first port (UP2a) having a passband at the downstream wavelength (λd2) associated to said optical network unit (6-2).

11. The wavelength division multiplexing passive optical network (1) according to any of claims 8 to 10, wherein said second mirror (41) has a reflectivity varying as a function of wavelength, said reflectivity being higher in said first waveband (B1) than in said second waveband (B2).

12. The wavelength division multiplexing passive optical network (1) according to claim 7, wherein said upstream wavelengths (λu1, λu2, ... λun) and said downstream wavelengths (λd1, λd2, ... λdn) are reciprocally interleaved.

13. The wavelength division multiplexing passive optical network (1) according to claim 12, wherein said wavelength multiplexer/demultiplexer (40) comprises a non-cyclic arrayed waveguide grating, said first port (UP2) having a passband comprising both the upstream wavelength (λu2) and the downstream wavelength (λd2) associated to said optical network unit (6-2).

14. The wavelength division multiplexing passive optical network (1) according to any of claims 6 to 13, wherein said remote node (4) further comprises a length of active optical fiber (44) interposed between said optical component (40) and said second mirror (41).

15. The wavelength division multiplexing passive optical network (1) according to claim 6, wherein said first mirror (24) and said optical amplifier (23) are located at said optical line termination (2).

## Patentansprüche

1. Optischer Sender (TX; TX'), umfassend:
- Einen ersten Spiegel (64; 24) und einen zweiten Spiegel (41; 71);
- einen optischen Verstärker (63; 23): und
- eine optische Komponente (40; 70) mit einem ersten Port (UP2; NP2) und einem zweiten Port (NP0; UP0),
wobei der besagte optische Sender (TX; TX') **dadurch gekennzeichnet ist, dass** die besagte optische Komponente (40; 70) einen dritten Port (NP1; UP1) aufweist, wobei die besagte optische Komponente (40; 70) derart konfiguriert ist, dass eine erste und eine zweite Beugungsordnung eines optischen Signals (U'2; D'2) mit einer Wellenlänge (λd2; λu2), welches über den besagten ersten Port (UP2; NP2) in die besagte optische Komponente (40; 70) eintritt, auf den besagten zweiten Port (NP0; UP0) bzw. auf den besagten dritten Port (NP1; UP1) gerichtet ist; und dass der besagte dritte Port (NP1; UP1) optisch mit dem besagten zwelten Spiegel (41; 21) verbunden ist, wobei der besagte erste Spiegel (64; 24) und der besagte zweite Spiegel (41; 71) einen Hohlraum, welcher die besagte optische Komponente (40; 70) und den besagten Verstärker (63) enthält, abgrenzen, wobei der besagte Hohlraum für das Aussenden einer kohärenten optischen Strahlung mit der besagten Wellenlänge (λu2) über den besagten zweiten Port (NP0) konfiguriert ist.

2. Optischer Sender (TX; TX') nach Anspruch 1, wobei die besagte optische Komponente (40; 70) einen Wellenlängenmultiplexer/-demultiplexer umfasst.

3. Optischer Sender (TX; TX') nach Anspruch 1 oder 2, wobei der besagte zweite Spiegel (41; 71) und die besagte optische Komponente (40; 70) in einer selben optischen Vorrichtung integriert sind.

4. Optischer Sender (TX; TX') nach einem beliebigen der vorstehenden Ansprüche, weiterhin umfassend einen Modulator (62; 22), der für das Modulieren einer sich hin- und herbewegenden Ausbreitung der optischen Strahlung In dem besagten Hohlraum konfiguriert ist, um ein moduliertes optisches Signal (U2; D2) an dem besagten zweiten Port (NP0) bereitzustellen.

5. Optischer Sender (TX; TX') nach Anspruch 4, wobei mindestens zwei der besagten ersten Spiegel (64; 24), der besagte optische Verstärker (63; 23) und der besagte Modulator (62; 22) in einer selben weiteren optischen Vorrichtung integriert sind.

6. Passives optisches Wellenlängenmultiplexnetzwerk (1), umfassend:
- Einen optischen Leitungsabschluss (2),
- n optische Netzwerkeinheiten (6-1, 6-2, -6-n), wobei n eine ganze Zahl und gleich oder höher als 1 ist, wobei den besagten n optischen Netzwerkeinheiten (6-1, 6-2, ... 6-n) n jeweilige Upstream-Wellenlängen (λu1, λu2, ... λun) und n jeweilige Downstream-Wellenlängen (λd1, λd2, ... λdn) zugeordnet werden; und
- einen entfernten Knoten (4), welcher optisch zwischen dem besagten optischen Leitungsabschluss (2) und den besagten optischen Netzwerkelnheiten (6-1, 6-2, -6-n) angeschlossen ist,
wobei das besagte passive optische Wellenlängenmultiplexnetzwerk (1) einen optischen Sender (TX; TX') gemäß einem beliebigen der Ansprüche 2 bis 5 umfasst.

7. Passives optisches Wellenlängenmultiplexnetzwerk (1) nach Anspruch 6, wobei:
- Der besagte erste Spiegel (64) und der besagte optische Verstärker (63) an einer optischen Netzwerkeinheit (6-2) der besagten optischen Netzwerkeinheiten (6-1, 6-2, -6-n); angeordnet sind; und
- der besagte Wellenlängenmultiplexer/-demultiplexer (40) und der besagte zweite Spiegel (41) an dem besagten entfernten Knoten (4) angeordnet sind.

8. Passives optisches Wellenlängenmultiplexnetzwerk (1) nach Anspruch 7, wobei die besagten Upstream-Wellenlängen (λu1, λu2, ... λun) in einem ersten Wellenbereich (B1) umfasst sind, und die besagten Downstream-Wellenlängen (λd1, λd2, ... λdn) in einem zweiten Wellenbereich (B2) umfasst sind, wobei sich der besagte erste Wellenbereich (B1) und der besagte zweite Wellenbereich (B2) nicht überlappen.

9. Passives optisches Wellenlängenmultiplexnetzwerk (1) nach Anspruch 8, wobei der besagte Wellenlängenmultiplexer/-demultiplexer (40) eine zyklische Wellenleitergitteranordnung umfasst, wobei der besagte erste Port (UP2) zwel unterschiedliche Durchlassbänder mit zwei verschiedenen Wellenlängen aufweist, wobei die besagten zwei verschiedenen Wellenlängen die Upstream-Wellenlänge (λu2) und die Downstream-Wellenlänge (λd2) sind, die der besagten optischen Netzworkeinheit (6-2) zugeordnet sind.

10. Passives optisches Wesllenlängenmultiplexnetzwerk (1) nach Anspruch 8, wobei der besagte Wellenlängenmultiplexer/-demultiplexer (40) eine nicht zyklische Wellenleitergitteranordnung umfasst, wobei der besagte erste Port (UP2b) ein Durchlassband mit der der besagten optischen Netzwerkeinheit (6-2) zugeordneten Upstream-Wellenlänge (λu2) aufweist, und wobei der besagte entfernte Knoten (4) ebenfalls einen weiteren Multiplexer/Demultiplexer (40a) umfasst, welcher parallel zu dem besagten Multiplexer/Demultiplexer (40b) angeordnet ist und eine nicht zyklische Wellenleitergitteranordnung umfasst, wobei der besagte weitere Multiplexer/Demultiplexer (40a) einen weiteren ersten Port (UP2a) aufweist, wobei der besagte weitere erste Port (UP2a) ein Durchlassband mit einer der besagten optischen Netzwerkeinheit (6-2) zugeordneten Downstream-Wellenlänge (λd2) aufweist.

11. Passives optisches Wellenlängenmultiplexnetzwerk (1) nach einem beliebigen der Ansprüche 8 bis 10, wobei der besagte zweite Spiegel (41) einen Reflexionsgrad aufweist, der in Abhängigkeit von der Wellenlänge variiert, wobei der besagte Reflexionsgrad in dem besagten ersten Wellenbereich (B1) höher Ist als in dem besagten zweiten Wellenbereich (B2).

12. Passives optisches Wellenlängenmultiplexnetzwerk (1) nach Anspruch 7, wobei die besagten Upstream-Wellenlängen (λu1, λu2, ... λun) und die besagten Downstream-Wellenlängen (λd1, λd2, ... λdn) wechselseitig verschachtelt sind.

13. Passives optisches Wellenlängenmultiplexnetzwerk (1) nach Anspruch 12, wobei der besagte Wollenlängenmultiplexer/-demultiplexer (40) eine nicht zyklische Wellenleitergitteranordnung umfasst, wobei der besagte erste Port (UP2b) ein Durchlassband aufweist, welches sowohl die Upstream-Wellanlänge (λu2) als auch die Downstream-Wallenlänge (λd2), die mit der besagten optischen Netzwerkeinheit (6-2) assoziiert sind, einschließt.

14. Passives optisches Wellenlängenmultiplexnetzwerk (1) nach einem beliebigen der Ansprüche 6 bis 13, wobei der besagte entfernte Knoten (4) weiterhin einen Abschnitt einer aktiven optischen Faser (44) umfasst, welcher zwischen der besagten optischen Komponente (40) und dem besagten zweiten Spiegel (41) eingefügt ist.

15. Passives optisches Wellenlängenmultiplexnetzwerk (1) nach Anspruch 6, wobei der besagte erste Spiegel (24) und der besagte optische Verstärker (23) an dem besagten optischen Leitungsabschluss (2) angeordnet sind.

## Revendications

1. Émetteur optique (TX ; TX') comprenant ;
- un premier miroir (64 ; 24) et un deuxième miroir (41 ; 71) ;
- un amplificateur optique (63 ; 23) ; et
- un composant optique (40 ; 70) comprenant un premier port (UP2 ; NP2) et un deuxième port (NP0 ; UP0),
ledit émetteur optique (TX ; TX') étant **caractérisé en ce que** ledit composant optique (40 ; 70) comprend un troisième port (NP1 ; UP1), ledit composant optique (40 ; 70) étant configuré de sorte qu'un premier et un deuxième ordres de diffraction d'un signal optique (U'2 ; D'2) à une longueur d'onde (λu2 ; λd2) entrant dans ledit composant optique (40 ; 70) à travers ledit premier port (UP2 ; NP2) soient focalisés au niveau dudit deuxième port (NP0 ; UP0) et au niveau dudit troisième port (NP1 ; UP1), respectivement ; et **en ce que**
ledit troisième port (NP1 ; UP1) est relié optiquement audit deuxième miroir (41 ; 21), ledit premier miroir (64 ; 24) et ledit deuxième miroir (41 ; 71) délimitant une cavité qui comprend ledit composant optique (40 ; 70) et ledit amplificateur optique (63), ladite cavité étant configurée pour émettre un rayonnement optique cohérent à ladite longueur d'onde (λu2) à travers ledit deuxième port (NP0).

2. Émetteur optique (TX; TX') selon la revendication 1, dans lequel ledit composant optique (40 ; 70) comprend un multiplexeur/démultiplexeur de longueur d'onde (40 ; 70).

3. Émetteur optique (TX ; TX') selon la revendication 1 ou 2, dans lequel ledit deuxième miroir (41 ; 71) et ledit composant optique (40 ; 70) sont intégrés dans un même dispositif optique.

4. Émetteur optique (TX ; TX') selon l'une quelconque des revendications précédentes, comprenant en outre un modulateur (62 ; 22) configuré pour moduler un rayonnement optique de cavité se propageant dans un mouvement de va-et-vient dans ladite cavité pour fournir au niveau dudit deuxième port (NP0) un signal optique modulé (U2 ; D2).

5. Émetteur optique (TX ; TX') selon la revendication 4, dans lequel au moins deux éléments parmi ledit premier miroir (64 ; 24), ledit amplificateur optique (63 ; 23) et ledit modulateur (62 ; 22) sont intégrés dans un même dispositif optique supplémentaire.

6. Réseau optique passif à multiplexage par répartition en longueur d'onde (1) comprenant:
- une terminaison de ligne optique (2),
- n unités de réseau optique (6-1, 6-2, -6-n), n étant un nombre entier supérieur ou égal à 1, lesdites n unités de réseau optique (6-1, 6-2, ... 6-n) ayant associé n longueurs d'onde en amont respectives (λu1, λu2, ... λun) et n longueurs d'onde en aval respectives (λd1, λd2, ... λdn) ; et
- un noeud distant (4) relié optiquement entre ladite terminaison de ligne optique (2) et lesdites unités de réseau optique (6-1, 6-2, -6-n),
ledit réseau optique passif à multiplexage par répartition en longueur d'onde (1) comprenant un émetteur optique (TX ; TX') selon l'une quelconque des revendications 2 à 5.

7. Réseau optique passif à multiplexage par répartition en longueur d'onde (1) selon la revendication 6, dans lequel :
- ledit premier miroir (64) et ledit amplificateur optique (63) sont situés au niveau d'une unité de réseau optique (6-2) desdites unités de réseau optique (6-1, 6-2, -6-n);et
- ledit multiplexeur/démultiplexeur de longueur d'onde (40) et ledit deuxième miroir (41) sont situés au niveau dudit noeud distant (4).

8. Réseau optique passif à multiplexage par répartition en longueur d'onde (1) selon la revendication 7, dans lequel lesdites longueurs d'onde en amont (λu1, λu2, ... λun) sont contenues dans une première bande d'onde (B1) et lesdites longueurs d'onde en aval (λd1, λd2, ... λdn) sont contenues dans une deuxième bande d'onde (B2), ladite première bande d'onde (B1) et ladite deuxième bande d'onde (B2) ne se chevauchant pas.

9. Réseau optique passif à multiplexage par répartition en longueur d'onde (1) selon la revendication 8, dans lequel ledit multiplexeur/démultiplexeur de longueur d'onde (40) comprend un réseau sélectif planaire cyclique, ledit premier port (UP2) ayant deux bandes passantes distinctes à deux longueurs d'onde différentes, lesdites deux longueurs d'onde différentes étant la longueur d'onde en amont (λu2) et la longueur d'onde en aval (λd2) associées à ladite unité de réseau optique (6-2).

10. Réseau optique passif à multiplexage par répartition en longueur d'onde (1) selon la revendication 8, dans lequel ledit multiplexeur/démultiplexeur de longueur d'onde (40b) comprend un réseau sélectif planaire non cyclique, ledit premier port (UP2b) ayant une bande passante à la longueur d'onde en amont (λu2) associée à ladite unité de réseau optique (6-2), et dans lequel ledit noeud distant (4) comprend aussi un autre multiplexeur/démultiplexeur (40a) disposé parallèlement audit multiplexeur/démultiplexeur (40b) et comprenant un réseau sélectif planaire non cyclique, ledit autre multiplexeur/démultiplexeur (40a) ayant un autre premier port (UP2a), ledit autre premier port (UP2a) ayant une bande passante à la longueur d'onde en aval (λd2) associée à ladite unité de réseau optique (6-2).

11. Réseau optique passif à multiplexage par répartition en longueur d'onde (1) selon l'une quelconque des revendications 8 à 10, dans lequel ledit deuxième miroir (41) a une réflectivité qui varie en fonction de la longueur d'onde, ladite réflectivité étant plus élevée dans ladite première bande d'onde (B1) que dans ladite deuxième bande d'onde (B2).

12. Réseau optique passif à multiplexage par répartition en longueur d'onde (1) selon la revendication 7, dans lequel lesdites longueurs d'onde en amont (λu1, λu2, ... λun) et lesdites longueurs d'onde en aval (λd1, λd2, ... λdn) sont réciproquement entrelacées.

13. Réseau optique passif à multiplexage par répartition en longueur d'onde (1) selon la revendication 12, dans lequel ledit multiplexeur/démultiplexeur de longueur d'onde (40) comprend un réseau sélectif planaire non cyclique, ledit premier port (UP2) ayant une bande passante comprenant à la fois la longueur d'onde en amont (λu2) et la longueur d'onde en aval (λd2) associées à ladite unité de réseau optique (6-2).

14. Réseau optique passif à multiplexage par répartition en longueur d'onde (1) selon l'une quelconque des revendications 6 à 13, dans lequel ledit noeud distant (4) comprend en outre une longueur de fibre optique active (44) interposée entre ledit composant optique (40) et ledit deuxième miroir (41).

15. Réseau optique passif à multiplexage par répartition en longueur d'onde (1) selon la revendication 6, dans lequel ledit premier miroir (24) et ledit amplificateur optique (23) sont situés au niveau de ladite terminaison de ligne optique (2).
